# EUROPEAN PATENT APPLICATION

(11) **EP 4 467 004 A1**
(43) Date of publication of application: **27.11.2024**
(21) Application number: 23878391.4
(22) Date of filing: 14.03.2023
(51) Int. Cl.: A23K 20/20, C05D 9/02

(54) **IRON PREPARATION FOR RAISING ANIMALS/PLANTS AND METHOD FOR PRODUCING SAME, AND IRON SUPPLY AGENT FOR RAISING ANIMALS/PLANTS**

(71) Applicant: Sobue Clay Co., Ltd., Minato-ku Nagoya-shi, Aichi 455-0071 (JP); Rema Corp., Chita-gun, Aichi 470-2102 (JP)
(72) Inventor: SOBUE Umeo, Nagoya-shi, Aichi 4550071 (JP); SASAMOTO Daisuke, Nagoya-shi, Aichi 4550071 (JP); Sasamoto Hirohiko, Chita-gun, Aichi 4702102 (JP)
(74) Representative: Hofstetter, Schurack & Partner
(86) International application number: PCT/JP2023/009762
(87) International publication number: WO 2024/189758

(57) **Abstract**

[Problems]

To prevent marked lowering of the Fe²⁺ ion concentration of the aqueous solution caused by precipitation of an organic acid iron salt due to lapse of time or temperature change, so that a high Fe²⁺ ion concentration can be maintained for a long period of time. To make it possible for animals and plants to take in iron efficiently and to make it possible to prevent soil pollution and water pollution.

[Means to Solve the Problems]

An aqueous solution of sodium ferrous citrate obtained by combining sodium hydrogen carbonate with an aqueous solution of iron citrate obtained by stirring and mixing citric acid, water and iron, wherein the amount of citric acid (assumed to have a purity of 100 %) per 100 ml of water is from 0.05 g to the dissolution limit amount of citric acid at the water temperature, the amount of iron (assumed to have a purity of 100 %) per 100 ml of water is from 10 to 25 parts by mass relative to 100 parts by mass of citric acid, and the amount of sodium hydrogen carbonate (assumed to have a purity of 100 %) per 100 ml of water is from 80 to 120 parts by mass relative to 100 parts by mass of citric acid.

## Description

### [Field of the Invention]

The present invention relates to an iron agent for growing animals and plants, which is in the form of an aqueous solution, has a high Fe²⁺ ion concentration and suppresses oxidation of Fe²⁺ ions. The present invention is also concerned with a method for producing the iron agent, and an iron supply preparation for growing animals and plants.

In the present invention, the term "use for growing animals and plants" includes use for growing plants (including marine algae, such as wakame seaweed and kelp, and marine plants, such as mangroves), livestock (e.g., cattle, horses, pigs and birds) and aquatic life (e.g., fish and shellfish), but does not include use for growing humans. Hereinafter, the term "use for growing animals and plants" is referred to simply as "use for growth".

### [Background Art]

Iron is a trace essential element indispensable for growing plants and animals (e.g., livestock and aquatic life). For example, it is known that iron deficiency in plants causes characteristic symptoms, such as chlorosis of leaves and impairment of protein synthesis.

As to plants, iron is taken in by them in ionic states. It is known that, among Fe ions, Fe³⁺ ions (trivalent iron ions) are not effectively absorbed by plants, so that it is difficult to obtain satisfactory growth effect.

For this reason, for example, in Patent Documents 1 and 2, contrivances have been made to supply iron as Fe²⁺ ions (divalent iron ions). However, Fe²⁺ ions are easily oxidized to Fe³⁺ ions and therefore it has been desired to develop an iron supply preparation capable of supplying Fe²⁺ ions stably for a long period of time.

The iron supply preparation for plants disclosed in Patent Document 1 is characterized in that the iron supply preparation comprises an aqueous solution in which FeO is dissolved in citric acid and which is obtained by heating a mixture containing citric acid powder, FeO powder and water, wherein the FeO powder has an FeO content of 50 % by mass or more, contains at least one multiple oxide selected from CaAl₂O₄, FeAl₂O₄, CaFe₂Si₂O₆, CaSi₂O₅ and MgFe₂O₄, and contains Fe²⁺ ions and Fe³⁺ ions, wherein the amount of the Fe²⁺ ions is from 50 to 90 % by mass of the total amount of Fe ions.

Patent Document 1 further proposes an iron supply preparation for plants, having an especially high Fe²⁺ ion concentration, which is prepared by dissolving in water a solid or paste obtained by drying the above-mentioned aqueous solution.

However, the iron supply preparation for plants disclosed in Patent Document 1 has a problem in that, when the iron supply preparation is produced under a general global environment, Fe²⁺ ions are easily oxidized to Fe³⁺ ions by oxygen in the air, resulting in the lowering of the amount of Fe²⁺ ions in the product.

The above problem can be avoided by a measure of reducing the amount of oxygen present in the production environment by using a pressure reducing device or a deaeration device. However, this measure poses another problem in that the production cost increases due to the increase in number of production devices.

Further, the aqueous solution having an especially high Fe²⁺ ion concentration, obtained by dissolving FeO powder in an organic acid, also has a problem in that an organic acid iron salt easily precipitates by lapse of time or temperature change, so that the Fe²⁺ ion concentration is lowered.

Especially, when citric acid is used as the organic acid, iron citrate as the salt precipitates. Iron citrate originally retains Fe²⁺ ions through its dissolution in the aqueous solution. However, in an aqueous solution in which iron citrate precipitates, the Fe²⁺ ion concentration of the aqueous solution is markedly lowered, so that it becomes impossible to obtain an aqueous solution having an especially high Fe²⁺ ion concentration.

The iron-containing composition for fertilizers, disclosed in Patent Document 2, is characterized in that the composition has a total iron content of from 3 to 50 wt%, and 25 wt% or more of the iron is present in the form of an iron compound containing crystalline water, wherein the crystalline water-containing iron compound is at least one member selected from ferrous hydroxide (Fe(OH)₂), ferric hydroxide (Fe(OH)₃) and double salts of iron.

However, most of the iron dissolved from the iron-containing composition for fertilizers is iron in the form of Fe³⁺ ions difficult for plants to take in, and therefore the iron-containing composition is not effective as a fertilizer. In addition, the water-soluble, inorganic iron salt mentioned above has another problem in that Fe²⁺ ions are unlikely to maintain this ionic state and are easily oxidized to Fe³⁺ ions, so that pollution of soil and water is caused due to salt accumulation.

That is to say, water-soluble, inorganic metal salts have long been used as various fertilizers and have posed a problem in that strong acid anions derived from the water-soluble, inorganic metal salts bond to other elements in the soil to form water-insoluble salts, which accumulate in the soil. Especially, EDTA (ethylenediaminetetraacetic acid) iron complex as an inorganic metal salt fertilizer for plants is substantially a chelating agent for trivalent iron, and there is a risk that it may fix heavy metals in the soil to cause soil pollution or may be dissolved in groundwater to cause water pollution.

### [Prior Art Documents]

### [Patent Documents]

[Patent Document 1] Japanese Patent No. 4096207
[Patent Document 2] Unexamined Japanese Patent Application Laid-Open Specification No. 1996-277183

### [Summary of the Invention]

### [Problems to Be Solved by the Invention]

The iron supply preparation for plants disclosed in Patent Document 1 has a problem in that Fe²⁺ ions are oxidized by oxygen in the air, resulting in lowering of the amount of Fe²⁺ ions. Further, the aqueous solution having an especially high Fe²⁺ ion concentration has a problem in that an organic acid iron salt precipitates by lapse of time or temperature change, thus markedly lowering the Fe²⁺ ion concentration of the aqueous solution.

The iron-containing composition for fertilizers disclosed in Patent Document 2 has a problem in that the iron-containing composition is not effective as a fertilizer because most of iron dissolved from it is in the form of Fe³⁺ ions difficult for plants to take in. Further, the water-soluble, inorganic iron salt has a problem in that Fe²⁺ ions are unlikely to maintain this ionic state and are easily oxidized to Fe³⁺ ions, resulting in accumulation of salts, which may fix heavy metals in the soil to cause soil pollution or may be dissolved in groundwater to cause water pollution.

### [Means to Solve the Problems]

The most characteristic feature of the iron agent of claim 1 for growth is that the iron agent comprises an aqueous solution of sodium ferrous citrate obtained by combining sodium hydrogen carbonate with an aqueous solution of iron citrate obtained by stirring and mixing citric acid, water and iron, wherein in the aqueous solution of sodium ferrous citrate, the amount of citric acid (assumed to have a purity of 100 %) per 100 ml of water is from 10 g to the dissolution limit amount of citric acid at the water temperature, the amount of iron (assumed to have a purity of 100 %) per 100 ml of water is from 5 to 60 parts by mass relative to 100 parts by mass of citric acid, and the amount of sodium hydrogen carbonate (assumed to have a purity of 100 %) per 100 ml of water is from 80 to 120 parts by mass relative to 100 parts by mass of citric acid.

The most characteristic feature of the method of claim 6 for producing the iron agent for growth is that the method comprises a step of dissolving iron in an aqueous solution of citric acid to produce an aqueous solution of iron citrate and a step of combining sodium hydrogen carbonate with the aqueous solution of iron citrate to produce sodium ferrous citrate.

The most characteristic feature of the iron supply preparation of claim 11 for growth is that the iron supply preparation contains the iron agent for growth of any one of claims 1 to 5 in an amount of 5 % by mass or more in terms of complete dry mass.

### [Effect of the Invention]

The inventions of claims 1, 6 and 11 are advantageous in that marked lowering of the Fe²⁺ ion concentration of the aqueous solution (caused by precipitation of an organic acid iron salt due to lapse of time or temperature change) can be prevented, so that a high Fe²⁺ ion concentration can be maintained for a long period of time.

In addition, the inventions of claims 1, 6 and 11 make it possible for animals and plants to take in iron efficiently and also can prevent soil pollution and water pollution.

### [Brief Description of Drawings]

[Fig. 1] Fig. 1 is an explanatory diagram showing the iron ion concentration in the production process of iron citrate.
[Fig. 2] Fig. 2 is an explanatory diagram showing the iron ion concentration in the production process of sodium ferrous citrate 1.
[Fig. 3] Fig. 3 is an explanatory diagram showing the iron ion concentration in the production process of sodium ferrous citrate 2.
[Fig. 4] Fig. 4 is an explanatory diagram showing the iron ion concentration in the production process of sodium ferrous citrate 3.
[Fig. 5] Fig. 5 is an explanatory diagram showing comparison among the growth conditions in Use Example 1.
[Fig. 6] Fig. 6 is an explanatory diagram showing comparison among the growth conditions in Use Example 2.
[Fig. 7] Fig. 7 is an explanatory diagram showing comparison among the growth conditions in Use Example 3.
[Fig. 8] Fig. 8 is an explanatory diagram showing comparison among the growth conditions in Use Example 4.
[Fig. 9] Fig. 9 is an explanatory diagram showing comparison among the growth conditions in Use Example 5.
[Fig. 10] Fig. 10 is an explanatory diagram showing comparison among the growth conditions in Use Example 6.

### [Best Mode for Carrying Out the Invention]

In the best mode of the aqueous solution of sodium ferrous citrate obtained by combining sodium hydrogen carbonate with iron citrate obtained by stirring and mixing citric acid, water and iron, the amount of citric acid (assumed to have a purity of 100 %) per 100 ml of water is from 10 g to the dissolution limit amount of citric acid at the water temperature, the amount of iron (assumed to have a purity of 100 %) per 100 ml of water is from 5 to 60 parts by mass relative to 100 parts by mass of citric acid, and the amount of sodium hydrogen carbonate (assumed to have a purity of 100 %) per 100 ml of water is from 80 to 120 parts by mass relative to 100 parts by mass of citric acid.

### [Example 1]

Hereinbelow, the present invention is described in detail with reference to Examples.

### [Iron agent for growth]

The iron agent for growth of the present invention comprises an aqueous solution of sodium ferrous citrate obtained by combining sodium bicarbonate (sodium hydrogen carbonate; NaHCOs) with an aqueous solution of iron citrate prepared by mixing citric acid, water and iron.

### [Citric acid]

The acid used for preparing the aqueous solution is limited to citric acid, which has no environmental impact and can be safely used. The citric acid is in the form of a solid or powder composed mainly of citric acid (usually having a purity of 99 % or more). So long as the solid or powder has such a high purity, the particle shape and the like of the solid or powder are not particularly limited, but it is preferred that the solid or powder has so small a particle size as to be easily dissolved in water.

The below-mentioned citric acid water in which citric acid is dissolved in water is adjusted to have a pH value of from 1.0 to 2.0. Such pH-adjusted citric acid water does not have pungent odor and, when combined with iron to produce an aqueous solution of iron citrate, can make the Fe²⁺ ion concentration especially high as compared to the acid concentration.

### [Water]

The water for dissolving citric acid is not particularly limited. For example, highly purified water, such as pure water or ion-exchanged water, can be used. Further, water which is commonly used, such as tap water, industrial water, agricultural water or ground water, can also be used.

### [Iron]

The iron added to citric acid water is not limited to FeO. A solid composed mainly of iron, such as Fe₂O₃ or Fe₃O₄, can also be used, and such a solid is referred to as "solid iron" in the present invention. The amount of iron in solid iron is not particularly limited, but the suitable iron content of solid iron is 50 % by mass or more (preferably 65 % by mass or more, more preferably 95 % by mass or more).

As examples of solid iron, there can be mentioned steel wool, iron-containing dust, scaly iron generated during wire-drawing processing, the iron-containing portion of casting sand, and various iron powders which are commercially available. Among these, iron powder having so small a particle size as to be easily dissolved in citric acid, is preferred. Solid iron is added to an aqueous solution of citric acid in an amount of from 1 to 25 parts relative to 100 parts of the aqueous solution of citric acid to prepare an aqueous solution of iron citrate.

### [Sodium hydrogen carbonate]

The sodium hydrogen carbonate (sodium bicarbonate) is a solid or powder composed mainly of sodium hydrogen carbonate (usually having a purity of 99 % or more). So long as the solid or powder has such a high purity, the particle shape and the like of the solid or powder are not particularly limited. It is preferred that the solid or powder has a fine particle size because such a solid or powder is easily dissolved in water.

The addition of sodium hydrogen carbonate to the aqueous solution of iron citrate produces sodium ferrous citrate having high stability and increases the pH value to cause the redox potential to reach the reduction point, so that transition of Fe²⁺ ions to Fe³⁺ ions by oxidation of Fe²⁺ ions can be suppressed.

### [Sodium ferrous citrate]

The aqueous solution of iron citrate is prepared by any one of the following methods: a method in which citric acid, solid iron and water are stirred and mixed together; a method in which solid iron is added to citric acid having been dissolved in water, followed by stirring and mixing; and a method in which solid iron and citric acid powder are added to a required amount of citric acid having been dissolved in water, followed by stirring and mixing while, if necessary, heating. To the thus obtained aqueous solution of iron citrate is mixed sodium hydrogen carbonate while, if necessary, heating, thereby producing an aqueous solution of sodium ferrous citrate. By the addition of sodium hydrogen carbonate, the aqueous solution of sodium ferrous citrate has been alkalized to have a pH value of from 5 to 8.

The amounts of citric acid, iron solid and sodium hydrogen carbonate are not particularly limited. In one embodiment, the amount of citric acid per 100 ml of water is 10 g (preferably the amount is determined arbitrarily in the range of from 15 g to the dissolution limit amount of citric acid at the aqueous solution temperature), the amount of solid iron per 100 ml of water is from 5 to 60 parts by weight relative to 100 parts by weight of citric acid, and the amount of sodium hydrogen carbonate per 100 ml of water is from 80 to 120 parts by weight relative to 100 parts by weight of citric acid.

When the aqueous solution of sodium ferrous citrate obtained by the above-mentioned stirring and mixing still contains undissolved citric acid, solid iron and/or sodium hydrogen carbonate, these undissolved components can be separated and removed from the solution by a filtration means, a centrifuge or the like. The filtration conditions for the filtration means are not particularly limited. For example, there can be used a membrane filter or filtration filter having a pore diameter of 10 µm or less, preferably 5 µm or less, more preferably 3 µm or less.

The aqueous solution of the iron agent for growth can be prevented from the generation of mold by addition to it of a water-soluble, antifungal agent, such as pyroligneous acid. When pyroligneous acid is used, its amount is from 1 to 10 % by mass of the amount of the iron agent.

The temperature for storing the aqueous solution of the iron agent for growth is not particularly limited. In one embodiment, it is preferred that it is stored at a low temperature of 15 °C or lower. Further, it is preferred that the aqueous solution of the iron agent for growth is stored in anaerobic environment.

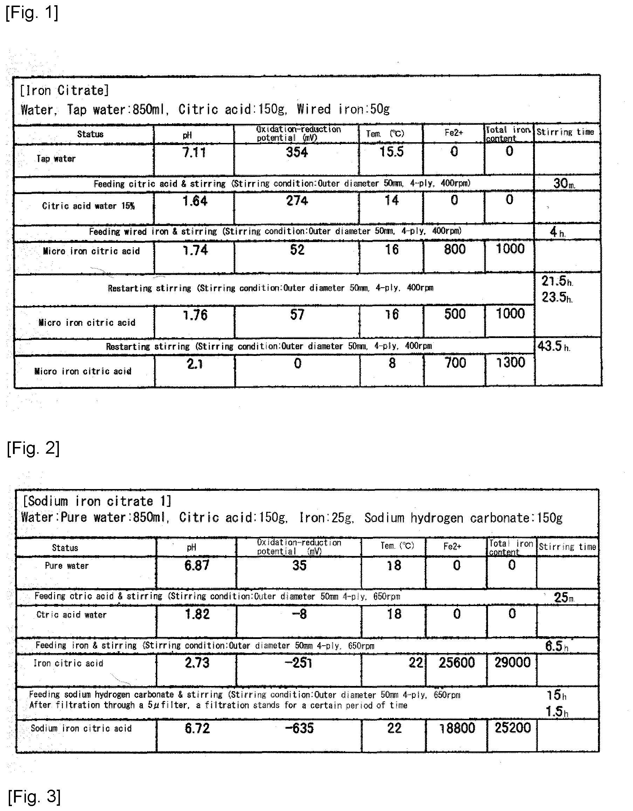

Fig. 1 shows the change of the Fe²⁺ ion concentration of an aqueous solution of iron citrate. Figs. 2 to 4 respectively show the change of the Fe²⁺ ion concentration of aqueous iron agent solutions 1 to 3 for growth, each of which is produced by the above-mentioned method. In the case of the aqueous iron citrate solution shown in Fig. 1, to which sodium hydrogen carbonate has not been added, the Fe²⁺ ion concentration is not confirmed to increase even when iron is mixed with the aqueous citrate solution while stirring. Therefore, it is judged that the aqueous iron citrate solution is not suitable as an iron agent for growth.

In the cases of aqueous sodium ferrous citrate solutions 1 to 3 shown in Figs. 2 to 4, the Fe²⁺ ion concentration is confirmed to increase, differing from the case of the aqueous iron citrate solution shown in Fig. 1. Therefore, it is judged that the aqueous sodium ferrous citrate solutions shown in Figs. 2 to 4 are suitable as an iron agent for growth.

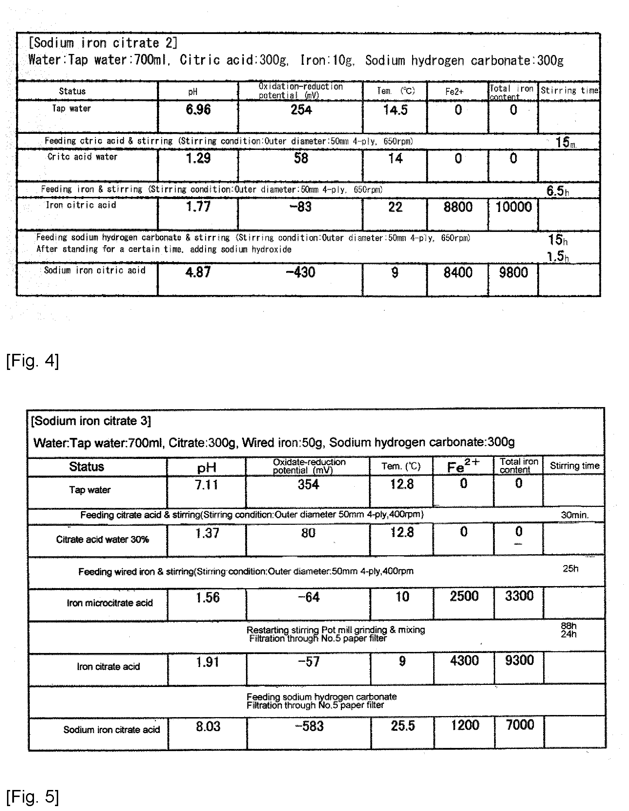

The "wire-drawing iron" as the "iron" used in the iron citrate shown in Fig. 1 and the sodium ferrous citrate shown in Fig. 4 is a cut iron (scale) that is cut and discharged by the die when an iron material is passed through the die to produce an iron wire rod.

### [Iron supply preparation for growth]

The iron supply preparation for growth may be in the form of an aqueous solution in which the above-mentioned sodium ferrous citrate is diluted to a required concentration, in the form of a solid in which the above-mentioned sodium ferrous citrate is carried on a porous carrier, such as a microporous material (e.g., activated carbon or zeolite) or on a macroporous material (e.g., pumice), or in the form of a mixture in which the above-mentioned sodium ferrous citrate is mixed with a biodegradable extender. However, in any case, it is necessary for the iron supply preparation for growth to contain the iron agent for growth in an amount of from 5 to 95 % by mass, preferably 50 % by mass or less, and most preferably 30 % by mass in terms of complete dry mass, based on the total mass of the iron supply preparation.

In addition to the iron agent, the iron supply preparation for growth may contain, singly or in combination, at least one member selected from, for example, lipoic acid, vitamins, the elements of Mn, Zn, Cu, Cr, Si, Mg, Ca, Co, Mo, Ni, and B, water-soluble compounds of S, water-soluble compounds of Cl, water-soluble metal salts, and extenders. It is preferred that the amount of the component(s) other than the iron agent is 30 parts by mass or less relative to 100 parts by mass of the iron agent. Suitable as extenders are zeolite, compost, clay, peat, chaff, diatomaceous earth, a biodegradable resin and the like.

### [Examples of the use of the iron supply preparation for growth]

The method of using the iron supply preparation for growth is not particularly limited. For example, it can be used by irrigating it to the soil or to the root of the target plant, or by spraying it on the leaf surface of the target plant. Further, when the iron supply preparation for growth is used as a culture solution for hydroponic cultivation, it can be used by immersing in it the root of the target plant or by mixing it with the soil.

Especially, the iron supply preparation for growth can be suitably used in alkaline soil. Herein, alkaline soil means soil which exhibits a pH value of more than 7 as measured with respect to a suspension obtained by adding 25 ml of distilled water to 10 g of the soil having been air-dried and shaking the resultant mixture for 1 hour. Examples of such alkaline soils include inherently alkaline soil and alkaline soil which is obtained by alkalization of non-alkaline soil through fertilization, desertification, etc.

Examples of inherently alkaline soils include soils containing various calcareous components singly or in combination. Examples of such soils include shell fossil soils, calcareous soil and coral soils. Further examples of inherently alkaline soils include mixed soils which are mixtures of a soil having one or more of these various calcareous components and a non-alkaline soil and which are alkaline as a whole.

### [Method for producing the iron agent for growth]

### (Step of producing iron citrate)

As mentioned above, in this step, for example, a mixture of citric acid powder, solid iron and water is stirred and mixed together to thereby obtain iron citrate in the form of an aqueous solution thereof.

The respective amounts of citric acid, solid iron and water to be charged when producing iron citrate are not particularly limited. For example, the mass ratio of citric acid (assumed to have a purity of 100 %): iron powder (assumed to have a purity of 100 %): water (assumed to have a purity of 100 %) may be adjusted within the range of 8-40:1-25:60-90, preferably 10-35:2-15:65-88, and most preferably 15-30:2.5-10:70-85.

The conditions for the above-mentioned stirring and mixing are not particularly limited, but it is necessary that the substances to be mixed come into contact with one another sufficiently to cause a combination reaction. For example, a dedicated stirring and mixing apparatus, such as a stirrer with a rotor blade, may be used, or the substances may be stirred by human power using a glass rod, a paddle, or the like.

Also, when the aqueous solution of iron citrate is produced and/or when sodium hydrogen carbonate is combined with the aqueous solution of iron citrate, heating may be performed if necessary. As for the heating conditions, the heating temperature is preferably maintained at 150°C or lower, more preferably at 140 °C or lower, and most preferably at 130 °C or lower. When the heating temperature is higher than 150 °C, the Fe³⁺ ion concentration of the aqueous solution increases, and therefore the Fe²⁺ ion concentration of the aqueous solution decreases.

On the other hand, the lower limit of the heating temperature is not particularly limited, and is, for example, 40 °C or higher, preferably 50 °C or higher, most preferably 60 °C or higher. The above-mentioned upper limit temperatures and lower limit temperatures are arbitrarily combined and set within the range of from 40 to 150 °C. A preferred example of combinations of the upper limit and lower limit temperatures is from 50 to 140 °C, a most preferred example is from 60 to 130 °C, and combinations other than these may be used.

The above-mentioned heating increases the amount of dissolved citric acid, which in turn increases the amount of dissolved iron. As a result, the Fe²⁺ ion concentration or Fe²⁺ ion complex concentration of the aqueous solution increases.

### (Step of producing sodium ferrous citrate)

The iron supply preparation for growth, which is an aqueous solution of sodium ferrous citrate, is produced by adding sodium bicarbonate (sodium hydrogen carbonate) to the aqueous solution of iron citrate produced in the production step for iron citrate, followed by stirring and mixing.

Sodium ferrous citrate is produced in a manner such that the amount per 100 ml of water is adjusted to 80 to 120 parts by weight relative to 100 parts by weight of citric acid.

In the following, the growth conditions of plants are shown by way of use examples in which the iron supply preparation for growth was sprayed on plants.

An aqueous solution of sodium ferrous citrate to be irrigated was prepared by adding 150 g of citric acid to 850 ml of tap water to produce citric acid water, then adding thereto 25 g of reduced iron powder, followed by stirring, and then adding to the resultant mixture 150 g of sodium hydrogen carbonate, followed by stirring and mixing.

### Use Example 1

Fig. 5 shows the growth conditions of a plant wherein molokheiya was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 30 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the molokheiya irrigated with sodium ferrous citrate, an improvement in rooting and an increase in the weight of the aboveground part were confirmed in comparison with the other plants.

### Use Example 2

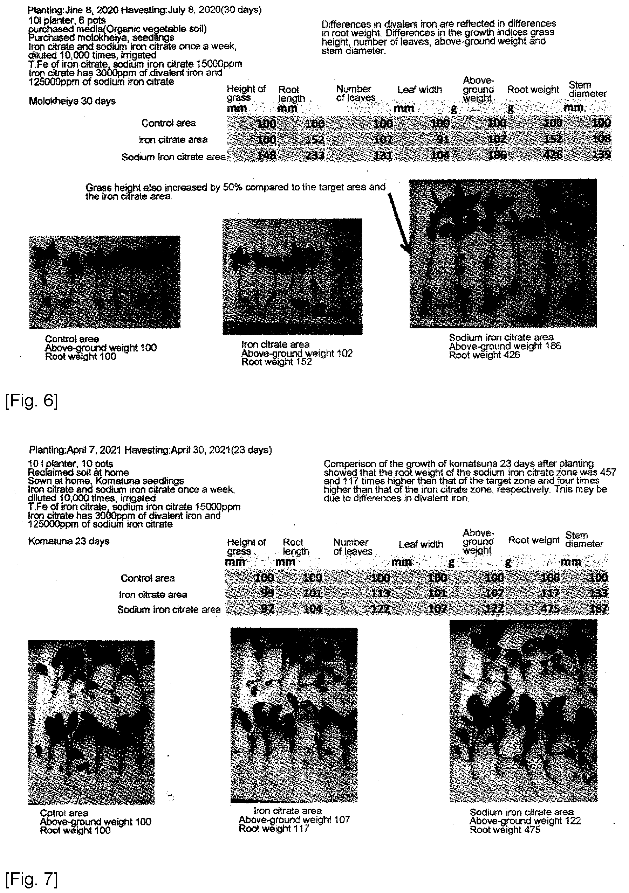

Fig. 6 shows the growth conditions of a plant wherein komatsuna (Japanese mustard spinach) was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 23 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the komatsuna irrigated with sodium ferrous citrate, an improvement in rooting and an increase in the weight of the aboveground part were confirmed in comparison with the other plants.

### Use Example 3

Fig. 7 shows the growth conditions of a plant wherein okra was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 19 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the okra irrigated with sodium ferrous citrate, an improvement in rooting and an increase in the weight of the aboveground part were confirmed in comparison with the other plants.

### Use Example 4

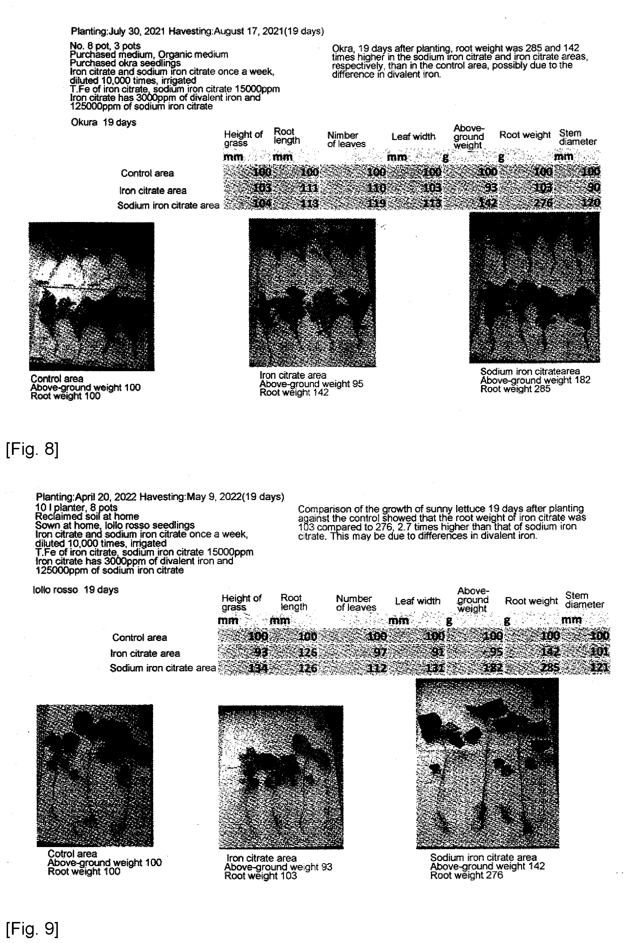

Fig. 8 shows the growth conditions of a plant wherein red leaf lettuce was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 19 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the red leaf lettuce irrigated with sodium ferrous citrate, an improvement in rooting and an increase in the weight of the aboveground part were confirmed in comparison with the other plants.

### Use Example 5

Fig. 9 shows the growth conditions of a plant wherein parsley was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 19 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the parsley irrigated with sodium ferrous citrate, an improvement in rooting and an increase in the weight of the aboveground part were confirmed in comparison with the other plants.

### Use Example 6

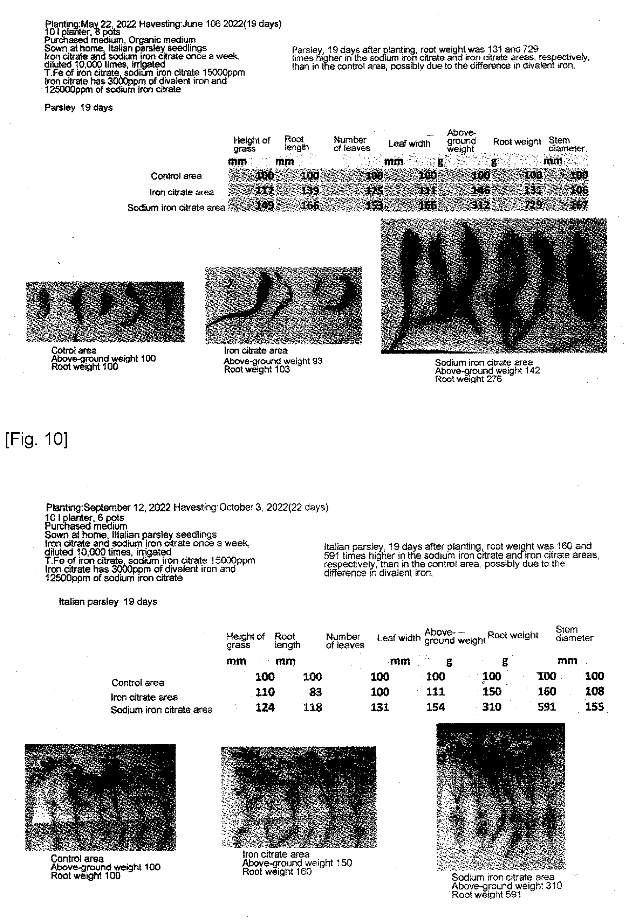

Fig. 10 shows the growth conditions of a plant wherein Italian parsley was used as the plant to be cultivated. Plants not irrigated with an iron agent (left side of the figure), plants irrigated with an aqueous solution of iron citrate (center of the figure), and plants irrigated with an aqueous solution of sodium citrate (right side of the figure) as the iron supply preparation for growth of the present application were provided, and the plants were cultivated while performing irrigation on the plants at a rate of once a week, and the growth conditions after 19 days of cultivation are shown. Each of the aqueous solution of iron citrate and the aqueous solution of sodium ferrous citrate was diluted 10000 times so that the total iron content was 15000 ppm, and the Fe²⁺ content was 3000 ppm for iron citrate and 12500 ppm for sodium ferrous citrate.

In the Italian parsley irrigated with sodium ferrous citrate, an improvement in rooting and an increase in the weight of the aboveground part were confirmed in comparison with the other plants.

### [Consideration]

The following consideration is made based on the results of Use Examples 1 to 6.

When the index in the case of no irrigation with an iron agent is 100, with respect to the plant's aboveground weight, it is 116 in the case of the irrigation with the aqueous solution of iron citrate and 209 in the case of the irrigation with the aqueous solution of sodium ferrous citrate, and with respect to the plant's root weight, it is 134 in the case of the irrigation with the aqueous solution of iron citrate and 464 in the case of the irrigation with the aqueous solution of sodium ferrous citrate.

From these facts, it is considered that Fe²⁺ ions greatly contribute to the growth of the root and aboveground part of the plant.

The iron agent and iron supply preparation produced in the above-described Example 1 are advantageous in that marked lowering of the Fe²⁺ ion concentration of the aqueous solution (caused by precipitation of an organic acid iron salt due to lapse of time or temperature change) can be prevented, so that a high Fe²⁺ ion concentration can be maintained for a long period of time. In addition, these iron agent and iron supply preparation make it possible for animals and plants to take in iron efficiently and also can prevent soil pollution and water pollution.

The production method shown in the above-described Example 1 enables efficient production of an iron agent which is advantageous in that precipitation of an organic acid iron salt due to lapse of time or temperature change can be suppressed, so that a high Fe²⁺ ion concentration can be maintained and there is little danger of soil pollution and water pollution.

## Claims

1. An iron agent for growing animals and plants which supplies iron as a trace essential element indispensable for growing animals and plants,
comprising an aqueous solution of sodium ferrous citrate obtained by combining sodium hydrogen carbonate with an aqueous solution of iron citrate obtained by stirring and mixing citric acid, water and iron,
wherein in said aqueous solution of sodium ferrous citrate, the amount of citric acid (assumed to have a purity of 100 %) per 100 ml of water is from 10 g to the dissolution limit amount of citric acid at the water temperature, the amount of iron (assumed to have a purity of 100 %) per 100 ml of water is from 5 to 60 parts by mass relative to 100 parts by mass of citric acid, and the amount of sodium hydrogen carbonate (assumed to have a purity of 100 %) per 100 ml of water is from 80 to 120 parts by mass relative to 100 parts by mass of citric acid.

2. The iron agent for growing animals and plants according to claim 1, wherein the aqueous solution of iron citrate comprises citric acid (assumed to have a purity of 100 %), water (assumed to have a purity of 100 %) and iron (assumed to have a purity of 100 %) at ratios of 8-40:1-25:60-90, respectively.

3. The iron agent for growing animals and plants according to claim 1, wherein the iron is a solid iron having an iron content of 50 % by mass or more.

4. The iron agent for growing animals and plants according to claim 1, wherein a fungicide is added to the aqueous solution of sodium ferrous citrate.

5. The iron agent for growing animals and plants according to claim 4, wherein the amount of the fungicide is 10 % by mass or less, based on the total mass of the aqueous solution of sodium ferrous citrate.

6. A method for producing the iron agent of claim 1 for growing plants and animals, comprising the steps of:
producing an aqueous solution of iron citrate by dissolving iron in an aqueous solution of citric acid at a ratio such that the amount of citric acid (assumed to have a purity of 100 %) per 100 ml of water is from 10 g to the dissolution limit amount of citric acid at the water temperature, and the amount of iron (assumed to have a purity of 100 %) per 100 ml of water is from 5 to 60 parts by mass relative to 100 parts by mass of citric acid; and
producing sodium ferrous citrate by combining sodium hydrogen carbonate with the aqueous solution of iron citrate at a ratio such that the amount of sodium hydrogen carbonate (assumed to have a purity of 100 %) per 100 ml of water is from 80 to 120 parts by mass relative to 100 parts by mass of citric acid.

7. The method for producing the iron agent for growing animals and plants according to claim 6, wherein heating is performed at a heating temperature of 150°C or lower when iron is dissolved in the aqueous solution of citric acid to produce iron citrate or/and when sodium hydrogen carbonate is combined with the aqueous solution of iron citrate.

8. The method for producing an iron agent for growing animals and plants according to claim 6, wherein the iron is a solid iron having an iron content of 50 mass % or more.

9. The method for producing an iron agent for growing animals and plants according to claim 6, which further comprises the step of adding a fungicide to the produced aqueous solution of sodium ferrous citrate.

10. An iron supply preparation for growing animals and plants which contains the iron agent of any one of claims 1 to 5 for growing animals and plants in an amount of 5 to 95 % by mass in terms of complete dry mass.

11. The iron supply preparation for growing animals and plants according to claim 10, wherein the iron agent for growing animals and plants is carried on a porous material.

12. The iron supply preparation for growing animals and plants according to claim 10, wherein at least one member selected from lipoic acid, vitamins, the elements of Mn, Zn, Cu, Cr, Si, Mg, Ca, Co, Mo, Ni, and B, water-soluble compounds of S, water-soluble compounds of Cl, and water-soluble metal salts is added to the iron agent in an amount of 30 parts by mass or less relative to 100 parts by mass of the iron agent.

13. The iron supply preparation for growing animals and plants according to claim 10, wherein at least one extender selected from zeolite, compost, clay, peat, chaff, diatomaceous earth, and a biodegradable resin is added to the iron agent for growing animals and plants in an amount of 30 parts by mass or less relative to 100 parts by mass of the iron agent for growing animals and plants.
